# EUROPÄISCHE PATENTSCHRIFT

(11) **EP 1 242 531 B1**
(45) Veröffentlichungstag und Bekanntmachung des Hinweises auf die Patenterteilung: **04.02.2004**
(21) Anmeldenummer: 00981352.8
(22) Anmeldetag: 08.12.2000
(51) Int. Cl.: C08L 23/02, C08L 23/04, C08L 23/10, C08L 61/28

(54) **BLENDS HOHER FESTIGKEIT UND FLAMMRESISTENZ**
BLENDS OF HIGH TENACITY AND FLAME RESISTANCE
MELANGES DE HAUTES RESISTANCE ET RESISTANCE AU FEU

(30) Priorität: 15.12.1999 AT 210999
(43) Veröffentlichungstag der Anmeldung: 25.09.2002
(73) Patentinhaber: Agrolinz Melamin GmbH, A-4021 Linz (AT)
(72) Erfinder: RATZSCH, Manfred, A-4062 Wilhering/Thalheim (AT); BUCKA, Hartmut, A-4622 Eggendorf (AT)
(74) Vertreter: Gross, Felix
(86) Internationale Anmeldenummer: PCT/EP2000/012421
(87) Internationale Veröffentlichungsnummer: WO 2001/044364

(56) Entgegenhaltungen:
- EP-A- 0 093 965
- GB-A- 1 367 035
- US-A- 3 317 631

## Beschreibung

Die Erfindung betrifft Blends hoher Festigkeit und Flammresistenz aus Methylensequenzen-enthaltenden thermoplastischen Polymeren und Melaminharzfasern, die für die Herstellung von Halbzeugen und Formstoffen eingesetzt werden.

Fasern auf Basis von Melamin-Formaldehyd-Polykondensaten sind bekannt (EP 0 221 330; EP 0 523 485; EP 0 845 010; EP 0 408 947; EP 0 845 010).

Bekannt ist ebenfalls die Verwendung von Fasern aus Melamin-Formaldehyd-Polykondensaten in polymeren Massen (EP 0 093 965).

Weiterhin ist bekannt, Verbunde auf Thermoplastbasis durch Einarbeitung von Melaminharzfasern in die Thermoplastschmelze und Verarbeitung der Compounds durch Extrusion, Spritzguss oder Pressen herzustellen (DE 41 25 601).

Von Nachteil ist die begrenzte Grenzflächenhaftung der Melaminharzfasern in der Thermo-plastmatrix, insbesondere in Polyolefinen, was zu einer unbefriedigenden Festigkeit der Verbunde führt.

Die Aufgabe der vorliegenden Erfindung bestand in der Entwicklung von Blends hoher Festigkeit und Flammresistenz aus Methylensequenzen-enthaltenden thermoplastischen Polymeren und Melaminharzfasern, die für die Herstellung von Halbzeugen und Formstoffen eingesetzt werden.

Überraschenderweise wurde gefunden, dass Blends aus Methylensequenzen-enthaltenden thermoplastischen Polymeren und Melaminharzfasern, die Copolymere und/oder Pfropfcopolymere sowie oligomere Polyester oder Alkydharze als Kompatibilisatoren enthalten, diese Anforderungen erfüllen.

Die erfindungsgemäße Aufgabe wurde durch Blends hoher Festigkeit und Flammresistenz aus 50 bis 97 Masse% Methylensequenzen-enthaltenden thermoplastischen Polymeren, 3 bis 50 Masse% Melaminharzfasern und 0,1 bis 20 Masse%, bezogen auf die Methylensequenzen-enthaltenden thermoplastischen Polymere, üblichen Zusatzstoffen gelöst, wobei die Blends erfindungsgemäss als weitere Komponente 0,1 bis 10 Masse%, bezogen auf die Methylensequenzen-enthaltenden thermoplastischen Polymere, Copolymere und/oder Pfropfcopolymere mit 0,1 bis 20 Masse% gebundenen Hydroxy-C₂-C₁₆-alkylacrylaten, Hydroxy-C₂-C₁₆-alkylmethacrylaten, ethylenisch ungesättigten C₃₋ bis C₁₆-Carbonsäuren, C₄₋ bis C₁₆-Dicarbonsäuren, C₄bis C₁₆-Dicarbonsäureanhydriden, C₅₋ bis C₁₇-Glycidylverbindungen und/oder C₅₋ bis C₁₆-Isoxalinverbindungen sowie oligomere Polyester oder Alkydharze als Kompatibilisatoren enthalten.

Bevorzugt sind die Methylensequenzen enthaltenden thermoplastischen Polymere Polyolefine, Polyvinylverbindungen, Polyvinylidenverbindungen, Polyester, Polyamide, Polyether und/ oder Polyurethane.

Beispiele für Polyvinylverbindungen und Polyvinylidenverbindungen sind Polyvinylacetat, Polyvinylchlorid, Polyvinylidenchlorid, Polyvinylbenzen, Polymethylmethacrylat und Polyacrylnitril.

Beispiele für Polyester sind Polyethylenterephthalat und Polybutylenterephthalat.

Beispiele für Polyamide sind Polyamid-4; Polyamid-6; Polyamid-6,6; Polyamid-6,10; Polyamid-11 und Polyamid-12.

Beispiele für Polyether sind Polyformaldehyd und Polypropylenoxid.

Bevorzugte Polyolefine sind Homo- und/oder Copolymere von α-Olefinen mit 2 bis 18 C-Atomen, insbesondere lineare und/oder verzweigte Polyethylen- Homo- und/ oder -Copolymere, Cycloolefin-Ethylen-Copolymere, Polypropylen-Homopolymere, statistische Propylen-Copolymere, Propylen-Blockcopolymere, statistische Propylen-Blockcopolymere, elastomere Polypropylene, nichtisotaktische Polypropylene, isotaktisches Polybuten-1 und/oder 4-Methylpenten-1- Homo- und/ oder -Copolymere.

Bevorzugt werden die in den erfindungsgemäßen Blends hoher Festigkeit und Flamm-resistenz enthaltenen Melaminharzfasern durch Lösungsspinnverfahren oder Schmelzespinnverfahren hergestellt.

Bevorzugt werden Melaminharzfasern Fasern einer Dicke von 1 bis 40 µm und einer Länge von 0,1 bis 50 mm, die gegebenenfalls mit 0,1 bis 3 Masse%, bezogen auf die Melaminharzfasern, flammhemmenden Schlichten vom Typ Siloxane, Polyalkohole, Phosphate und/oder Polyphosphate beschichtet sind, wobei die Melaminharzfasern aus hochkonzentrierten wässrigen Lösungen der, gegebenenfalls mit C₁-C₈-Alkoholen veretherten, Melaminharze durch Zentrifugenspinnen, Fadenziehen, Extrudieren oder Fibrillierungsprozesse, gegebenenfalls nachfolgende Reckung, und Härtung hergestellt worden sind, die Melaminharze Polykondensate aus Melamin mit Formaldehyd und/oder Mischungen aus 20 bis 99,9 Masse% Melamin und 0,1 bis 80 Masse% Melaminderivaten und/oder Triazinderivaten, bevorzugt Ammelin, Ammelid, Cyanursäure und/oder Cyanmelluramid enthaltende Mischungen, gegebenenfalls unter Zusatz von 0,1 bis 10 Masse%, bezogen auf die Summe von Melamin, Melaminderivaten und Triazinderivaten, an Phenolen, mit Formaldehyd, sind, und das Molverhältnis Melamin/Formaldehyd bzw. Melamin + Melaminderivat bzw. Triazinderivat / Formaldehyd in den Melaminharzfasern 1 : 1,1 bis 1 : 5 beträgt.

Eine weitere bevorzugte Variante sind Melaminharzfasern einer Dicke von 1 bis 100 µm und einer Länge von 0,1 bis 50 mm, die gegebenenfalls mit 0,1 bis 3 Masse%, bezogen auf die Melaminharzfasern, flammhemmenden Schlichten vom Typ Siloxane, Polyalkohole, Phosphate und/oder Polyphosphate beschichtet sind, wobei die Melaminharzfasern durch Schmelzeverspinnen von mit C₁-C₈-Alkoholen veretherten Melaminharzen bei Massetemperaturen von 140 bis 200°C und gegebenenfalls Nachhärtung und Reckung der Fasern hergestellt worden sind, die Melaminharze Polykondensate aus Melamin mit Formaldehyd und/oder Mischungen aus 20 bis 99,9 Masse% Melamin und 0,1 bis 80 Masse% Melaminderivaten und/oder Triazinderivaten, bevorzugt Ammelin, Ammelid, Cyanursäure und/oder Cyanmelluramid enthaltende Mischungen, gegebenenfalls unter Zusatz von 0,1 bis 10 Masse%, bezogen auf die Summe von Melamin, Melaminderivaten und Triazinderivaten, an Phenolen, mit Formaldehyd, sind, und das Molverhältnis Melamin/Formaldehyd bzw. Melamin + Melaminderivat bzw. Triazinderivat / Formaldehyd in den Melaminharzfasern 1 : 1,1 bis 1 : 5 beträgt.

Die Melaminharze zur Herstellung der in den erfindungsgemäßen Blends hoher Festigkeit und Flammresistenz enthaltenen Melaminharzfasern werden durch Polykondensation von Melamin mit Formaldehyd und/oder Mischungen aus 20 bis 99,9 Masse% Melamin und 0,1 bis 80 Masse% Melaminderivaten und/oder Triazinderivaten, gegebenenfalls unter Zusatz von 0,1 bis 10 Masse%, bezogen auf die Summe von Melamin, Melaminderivaten und Triazinderivaten, an Phenolen, mit Formaldehyd hergestellt, wobei das Molverhältnis Melamin/Formaldehyd bzw. Melamin + Melaminderivat bzw. Triazinderivat / Formaldehyd 1 : 1,1 bis 1 : 5 beträgt.

Die in den Blends hoher Festigkeit und Flammresistenz enthaltenen Melaminharzfasern aus Melamin, Melaminderivaten, Triazinderivaten, gegebenenfalls substituierten Phenolen, und Formaldehyd werden bevorzugt unter Einsatz von durch Hydroxy-C₂-C₁₀-alkylgruppen , Hy-droxy-C₂-C₄-alkyl-(oxa-C₂-C₄-alkyl)₁₋₅-gruppen und/oder durch Amino-C₂-C₁₂-alkylgruppen substituierten Melaminen wie 2-(2-Hydroxyethyl-amino)-4,6-diamino-1,3,5-triazin, 2-(5-Hydroxy-3-oxa-pentylamino)-4,6-diamino-1,3,5-triazin oder 2,4,6-Tris-(6-aminohexylamino)-1,3,5-triazin als Melaminderivate bzw. unter Einsatz von durch Hydroxy-C₂-C₁₀-alkylgruppen, Hydroxy-C₂-C₄-alkyl-(oxa-C₂-C₄alkyl)₁₋₅-gruppen und/oder Amino-C₂-C₁₂-alkyl-gruppen substituierten Diaminomethyltriazinen und/oder Diaminophenyltriazinen wie 2,4-(Di-5-hydroxy-3-oxapentylamin)-6-methyl-1,3,5-triazin, als Triazinderivate hergestellt.

Die in den Blends hoher Festigkeit und Flammresistenz enthaltenen Melaminharzfasern aus Melamin, Melaminderivaten, Triazinderivaten, gegebenenfalls substituierten Phenolen, und Formaldehyd können als Phenolkomponente C₁-C₉-Alkylphenole, Hydroxyphenole und Bisphenole enthalten. Beispiele für geeignete Phenole sind Phenol, 4-tert.-Butylphenol, Resorcin, 2,2-Bis(4-hydroxyphenyl)propan und 4,4'-Dihydroxydiphenylsulfon.

Die Veretherung von Melaminharzen mit C₁-C₈-Alkoholen kann durch Umsetzung der Lösungen der Melaminharzvorkondensate mit den entsprechenden Alkoholen, durch Eintrag von Melaminfestharzen in die entsprechenden Alkohole in saurem Medium oder direkt durch Polykondensation von Melamin und Aldehyd in den entsprechenden Alkoholen erfolgen. Melaminharzether mit höheren Alkoholen lassen sich durch Umetherung, z.B. von Hexa-methylolmelaminhexamethylether mit dem entsprechenden höheren Alkohol, herstellen.

Besonders bevorzugte flammhemmende Schlichten vom Typ Polyalkohole zur Beschichtung von Melaminharzfasern sind Pentaerythrit, Pentite und Hexite.

Bei den durch Zentrifugenspinnverfahren von Melaminharzlösungen hergestellten Melamin-harzfasern werden Kurzfasern vom Typ Fibride besonders bevorzugt.

Die Trocknung der Lösungen der veretherten Melaminharze für das Schmelzespinnverfahren erfolgt bevorzugt durch Sprühtrocknung. Das Fadenbildungsvermögen beim Verspinnen aus der Schmelze lässt sich durch den Umfang der Veretherung und die Vorhärtung während des Trocknungsvorganges einstellen.

Die in den Blends hoher Festigkeit und Flammresistenz enthaltenen Kompatibilisatoren sind Copolymere und/oder Pfropfcopolymere mit 0,1 bis 20 Masse% gebundenen Hydroxy-C₂-C₁₆-alkyl-acrylaten, Hydroxy-C₂-C₁₆-alkyl-methacrylaten, ethylenisch ungesättigten C₃₋ bis C₁₆-Carbonsäuren, C₄₋ bis C₁₆-Dicarbonsäuren, C₄₋ bis C₁₆-Dicarbonsäureanhydriden, C₅₋ bis C₁₇-Glycidylverbindungen und/oder C₅₋ bis C₁₆-Isoxalinverbindungen sowie oligomere Polyester oder Alkydharze.

Bevorzugte Copolymere und/oder Pfropfcopolymere als Kompatibilisatoren sind Hydroxy-ethyl(meth)acrylat-Butyl(meth)acrylat-(Meth)Acrylsäure-Copolymere und mit Hydroxyethyl-(meth)acrylat gepfropfte Polyethylene, Polypropylene bzw. Ethylen-Vinylacetat-Copolyere.

Weitere Beispiele für Copolymere als Kompatibilisatoren sind Ethylen-Ethylacrylat-Glycidyl-methacrylat-Copolymere, Ethylen-Butylmethacrylat-Methacrylsäure-Copolymere und Styren-Butylacrylat-Hydroxypropylacrylat-Copolymere.

Weitere Beispiele für Pfropfcopolymere als Kompatibilisatoren sind Glycidylmethacrylat-gepfropfte Ethylen-Vinylacetat-Copolymere, Maleinsäureanhydrid gepfropftes Polypropylen und Isopropenylisoxalin-gepfropftes Polyethylen.

Beispiele für geeignete oligomere Polyester als Kompatibilisatoren sind lineare Polyester auf Basis Butandiol-1.3, Phthalsäure und Adipinsäure und verzweigte Polyester auf Basis Neopentylglycol, Trimethylolpropan, Isophthalsäure und Azelainsäure mit Mₙ-Werten im Bereich von 600 bis 2000.

Beispiele für geeignete Alkydharze als Kompatibilisatoren sind Alkydharze auf Basis p-tert.-Butylbenzoesäuremonoglycidester, Trimethylolpropan, 1,6-Hexandiol, Phthalsäureanhydrid und Hexahydrophthalsäureanhydrid sowie Alkydharze auf Basis von linearen und verzweigten Fettsäureglycidestern, Trimethylolpropan, Ethylenglycol, Phthalsäureanhydrid und Adipinsäureanhydrid.

Als übliche Zusatzstoffe können die erfindungsgemäßen Blends hoher Festigkeit und Flammresistenz 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 3 bis 18 Masse% Füllstoffe, 1 bis 18 Masse% Flammschutzmittel und/oder 0,01 bis 5 Masse% Verarbeitungshilfsmittel, jeweils bezogen auf die Methylensequenzen enthaltenden thermoplastischen Polymere, enthalten.

Als Stabilisatoren können in den erfindungsgemäßen Blends hoher Festigkeit und Flammresistenz gegebenenfalls bevorzugt Mischungen aus 0,01 bis 0,6 Masse% phenolischen Antioxidantien, 0,01 bis 0,6 Masse% Verarbeitungsstabilisatoren auf Basis von Phosphiten, 0,01 bis 0,6 Masse% 3-Arylbenzofuranonderivaten, 0,01 bis 0,6 Masse% Hochtemperaturstabilisatoren auf Basis von Disulfiden und Thioäthem und/oder 0,01 bis 0,8 Masse% sterisch gehinderte Aminen (HALS), jeweils bezogen auf die eingesetzten Methylensequenzen enthaltenden thermoplastischen Polymere, enthalten sein.

Die Blends hoher Festigkeit und Flammresistenz werden erfindungsgemäss durch Homogenisierung von Mischungen aus 50 bis 97 Masse% Methylensequenzen-enthaltenden thermoplastischen Polymeren, 3 bis 50 Masse% Melaminharzfasern, 0,1 bis 20 Masse%, bezogen auf die Methylensequenzen-enthaltenden thermoplastischen Polymere, üblichen Zusatzstoffen und 0,1 bis 10 Masse%, bezogen auf die Methylensequenzen-enthaltenden thermoplastischen Polymeren, Copolymere und/oder Pfropfcopolymere mit 0,1 bis 20 Masse% gebundenen Hydroxy-C₂-C₁₆alkyl-acrylaten, Hydroxy-C₂-C₁₆-alkyl-methacrylaten, ethylenisch ungesättigten C₃₋ bis C₁₆-Carbonsäuren, C₄₋ bis C₁₆-Dicarbonsäuren, C₄₋ bis C₁₆-Dicarbonsäureanhydriden, C₅₋ bis C₁₇-Glycidylverbindungen und/oder C₅₋ bis C₁₆-Isoxalinver-bindungen sowie oligomere Polyester oder Alkydharze als Kompatibilisatoren in kontinuierlichen Knetern bei Massetemperaturen im Bereich von 140 bis 290°C und Verweilzeiten von 2 bis 15 min hergestellt.

Als kontinuierliche Kneter werden bei dem Verfahren zur Herstellung von Blends hoher Festigkeit und Flammresistenz bevorzugt Doppelschneckenextruder mit einer Schneckenlänge L/D von 35 bis 50 eingesetzt.

Eine bevorzugte Variante des Verfahrens zur Herstellung von Blends hoher Festigkeit und Flammresistenz besteht darin, dass die Melaminharzfasern bei der Herstellung der Blends als Batch aus 50 bis 95 Masse% Melaminharzfasern und 50 bis 5 Masse% Kompatibilisatoren eingesetzt werden.

Die Melaminharzfasern können bei der Herstellung von Blends hoher Festigkeit und Flammresistenz zusammen mit den anderen Blendkomponenten in den kontinuierlichen Kneter dosiert werden oder als bevorzugte Variante direkt in die Schmelze dosiert werden.

Bevorzugt werden die erfindungsgemäßen Blends hoher Festigkeit und Flammresistenz zur Herstellung von Folien, Fasern, Platten, Beschichtungen, Rohren, Spritzgussartikeln, Hohlkörpern und Schaumstoffen verwendet.

### Beispiel 1

In einen Werner&Pfleiderer-Doppelschneckenextruder ZSK 30, L/D=42, mit Feststoffdosier-stutzen in Zone 3, Temperaturprofil 130/170/195/220/220/180°C, wird ein Polypropylen-Ho-mopolymer (Schmelzindex 7,6 g/10 min bei 230°C/2, 16 kp), das 0,25 Masse% Bis-2,2,6,6-tetramethyl-4-piperidylsebazat als Stabilisator enthält, mit 3,3 kg/Std. und ein modifiziertes Polypropylen (Schmelzindex 12,2 g/10 min bei 230°C/2,16 kp, Gehalt an gebundenem Butylacrylat 2,0 Masse% und an gebundenem Hydroxyethylmethacrylat 2,2 Masse%) mit 2,4 kg/Std. dosiert. In die Zone 3 werden über eine Stopfschnecke mit 0,72 kg/Std. Melaminharzfasern (Länge 3 mm, Dicke 15 µm, auf Basis von 90 Masse% Melamin und 10 Masse% 5-Hydroxy-3-oxapentylamino-1,3,5-triazin als Melaminkomponenten) dosiert und eingearbeitet.

Das resultierende Polypropylenblend besitzt eine Zugfestigkeit von 24,8 MPa und einen E-Modul von 3,5 GPa. Die Flammwidrigkeitsprüfung nach UL 94 (1,6 mm) erfüllt die Kriterien für die Einordnung in die Klasse V-0.

### Beispiel 2

In einen Doppelschneckenextruder nach Beispiel 1, Temperaturprofil 80/120/140/150/140/ 120°C, wird ein Styren-Suspensionspolymerisat (K-Wert 73), das 0,15 Masse% Dihydroxymethoxybenzophenon und 0,10 Masse% Bis-2,2,6,6-tetramethyl-4-piperidylsebazat als Stabilisatoren enthält, mit 4,2 kg/Std. dosiert. In die Zone 3 wird über eine Stopfschnecke mit 2,26 kg/Std. ein Batch aus 85 Masse% Melaminharzfasern (Länge 2,5 mm, Dicke 12 µm, auf Basis von 75 Masse% Melamin, 2,5 Masse% 2-(5-Hydroxy-3-oxypentylamin)-4,6-diamino-1,3,5-triazin, 12,5 Masse% 2,4-Di-(5-hydroxy-3-oxapentylamin)-6-amino-1,3,5-triazin und 10 Masse% 2,4,6-Tri-(5-hydroxy-3-oxapentylamin)-1,3,5-triazin als Melaminkomponenten ) und 15 Masse% Kompatibilisator (Styren-Hydroxypropylacrylat-Ethylmethacrylat-Copolymer, Ge-halt an Hydroxypropylacrylat 22 Masse%) dosiert.

Das resultierende Polystyrenblend besitzt eine Zugfestigkeit von 43,1 MPa und einen E-Modul von 4,05 GPa. Die Flammwidrigkeitsprüfung nach UL 94 (1,6 mm) erfüllt die Kriterien für die Einordnung in die Klasse V-0.

Das entsprechende Polystyrenblend ohne Kompatibilisator besitzt dagegen eine Zugfestigkeit von 37,0 MPa und einen E-Modul von 3,55 GPa.

### Beispiel 3

In einen Doppelschneckenextruder nach Beispiel 1, Temperaturprofil 100/130/155/185/185/ 140°C, wird ein LDPE-Homopolymer (Schmelzindex 3,5 g/10 min bei 190°C/2,16 kp), das 0,25 Masse% Bis-2,2,6,6-tetramethyl-4-piperidylsebazat als Stabilisator enthält, mit 3,2 kg/Std. und ein modifiziertes Polyethylen (Schmelzindex 12,2 g/10 min bei 230°C/2,16 kp, Gehalt an gebundenem Glycidylmethacrylat 3,5 Masse%) mit 0,6 kg/Std. dosiert. In die Zone 3 werden über eine Stopfschnecke mit 1,63 kg/Std. Melaminharzfasern (Länge 3 mm, Dicke 15 µm, auf Basis von 90 Masse% Melamin und 10 Masse% 5-Hydroxy-3-oxapentylamino-1,3,5-triazin als Melaminkomponenten) dosiert und eingearbeitet.

Das resultierende Polyethylenblend besitzt eine Zugfestigkeit von 5,6 MPa und einen E-Modul von 135 MPa. Die Flammwidrigkeitsprüfung nach UL 94 (1,6 mm) erfüllt die Kriterien für die Einordnung in die Klasse V-0.

Das entsprechende Polyethylenblend ohne Kompatibilisator besitzen dagegen eine Zug-festigkeit von 3,0 MPa und einen E-Modul von 98 MPa.

### Beispiel 4

In einen Doppelschneckenextruder nach Beispiel 1, Temperaturprofil 130/170/195/220/ 220/ 180°C, wird ein Blend aus 65 Masse% eines Polypropylen-Homopolymers (Schmelzindex 7,6 g/10 min bei 230°C/2,16 kp), das 0,25 Masse% Bis-2,2,6,6-tetramethyl-4-piperidylsebazat als Stabilisator enthält, 30 Masse% EPDM-Kautschuk (Ethylengehalt 75 Masse%, Dienkomponente Dicyclopentadien) und 5 Masse% modifiziertes Polypropylen (Schmelzindex 12,5 g/10 min bei 230°C/2, 16 kp, Gehalt an gebundenem Maleinsäureanhydrid 0,42 Masse%), mit 4,2 kg/Std. dosiert. In die Zone 3 werden über eine Stopfschnecke mit 1,05 kg/Std. Melaminharzfasern (Länge 3 mm, Dicke 15 µm, auf Basis von 90 Masse% Melamin und 10 Masse% 5-Hydroxy-3-oxapentylamino-1,3,5-triazin als Melaminkomponenten) dosiert und eingearbeitet.

Das resultierende Polyolefinblend besitzt eine Zugfestigkeit von 23,5 MPa und einen E-Modul von 1,8 GPa. Die Flammwidrigkeitsprüfung nach UL 94 (1,6 mm) erfüllt die Kriterien für die Einordnung in die Klasse V-0.

### Beispiel 5

### 5.1 Herstellung und Vorhärtung des veretherten Melaminharzes

In einem 50 I - Rührreaktor mit Kühler und Bodenablassventil werden zu einer Lösung von 300 ml konzentrierter Salzsäure in 13,5 I Methanol bei 35°C innerhalb von 45 min 4,5 kg eines Festharzes auf Basis von Melamin und Formaldehyd eingetragen. Nach weiteren 80 min Rühren bei 35°C wird mit methanolischer KOH neutralisiert und nachfolgend im Vacuum bei 300 mbar rd. 10,5 I Methanol abdestilliert. Der Reaktionsansatz wird mit 3 I Butanol verdünnt, die abgeschiedenen Salze nach 2,5 h über das Bodenablassventil abgezogen und der Reaktionsansatz bei 300 mbar so-lange eingeengt, bis eine Viscosität von rd. 550 Poise bei 30°C erreicht ist, ausgetragen und gebrochen.

Zur Trocknung und Vorhärtung wird das verätherte Festharz in einen Werner&Pfleiderer - Doppelschneckenextruder ZSK 30 mit Vacuumentgasung, UD= 42, Temperaturprofil 90/ 125/150/165/165/140/125/115°C, dosiert und der austretende Strang granuliert.

### 5.2 Herstellung der Melaminharzfaser nach dem Schmelzespinnverfahren

In einer Laborspinnanlage aus Plastifizierextruder, Schmelzepumpe, Kapillarwerkzeug, Blasschacht, Abzugseinrichtung und Wickler wird das veretherte Melaminharz bei einer Massetemperatur von 165°C im Extruder aufgeschmolzen. Die Schmelze wird mit der Schmelzepumpe zur Spinndüse überführt und bei einer Temperatur der Spinndüse von 160°C durch den Blasschacht, der mit komprimierter Luft einer Temperatur von 20°C gekühlt wird, mit einer Abzugsgeschwindigkeit von 200 m/min abgezogen, aufgewickelt und die 40 µm-Faser bei 90°C/2 h in HCl - gesättigter Atmosphäre nachgehärtet.

### 5.3 Herstellung des Blends aus Polypropylen und veretherter Melaminharzfaser

In einen Werner&Pfleiderer-Doppelschneckenextruder nach Beispiel 1, Temperaturprofil 130/170/195/220/220/180°C, wird ein Polypropylen-Homopolymer (Schmelzindex 7,6 g/10 min bei 230°C/2,16 kp), das 0,25 Masse% Bis-2,2,6,6-tetramethyl-4-piperidylsebazat als Stabilisator enthält, mit 3,6 kg/Std., und ein modifiziertes Polypropylen (Schmelzindex 8,5 g/10 min bei 230°C/2,16 kp, Gehalt an gebundenem Butylacrylat 1,0 Masse%, Ethylhexylacrylat 1,0 Masse% und an gebundenem Glycidylmethacrylat 1,6 Masse%) mit 2,2 kg/Std. dosiert. In die Zone 3 werden über eine Stopfschnecke mit 5,8 kg/Std. Melaminharzfasern (Länge 4 mm, Dicke 40 µm, mit 1,5 Masse% Pentaerythrit als Schlichte beschichtet) dosiert und eingearbeitet.

Das resultierende Polypropylenblend besitzt eine Zugfestigkeit von 53,2 MPa und einen E-Modul von 1,92 GPa. Die Flammwidrigkeitsprüfung nach UL 94 (1,6 mm) erfüllt die Kriterien für die Einordnung in die Klasse V-0.

## Patentansprüche

1. Blends hoher Festigkeit und Flammresistenz aus 50 bis 97 Masse% Methylensequenzen-enthaltenden thermoplastischen Polymeren, 3 bis 50 Masse% Melamin-harzfasern und 0,1 bis 20 Masse%, bezogen auf die Methylensequenzen-enthaltenden thermoplastischen Polymere, üblichen Zusatzstoffen, **dadurch gekennzeichnet, dass** die Blends als weitere Komponente 0,1 bis 10 Masse%, bezogen auf die Methylensequenzen-enthaltenden thermoplastischen Polymere, Copolymere und/oder Pfropfcopolymere mit 0,1 bis 20 Masse% gebundenen Hydroxy-C₂-C₁₆-alkyl-acrylaten, Hydroxy-C₂-C₁₆-alkyl-methacrylaten, ethylenisch ungesättigten C₃- bis C₁₆-Carbonsäuren, C₄- bis C₁₆-Dicarbonsäuren, C₄₋ bis C₁₆-Dicarbonsäureanhydriden, C₅₋ bis C₁₇-Glycidylverbindungen und/oder C₅₋ bis C₁₆-Isoxalinver-bindungen sowie oligomere Polyester oder Alkydharze als Kompatibilisatoren enthalten.

2. Blends hoher Festigkeit und Flammresistenz nach Anspruch 1, **dadurch gekennzeichnet, dass** die Methylensequenzen enthaltenden thermoplastischen Polymere Polyolefine, Poly-vinylverbindungen, Polyvinylidenverbindungen, Polyester, Polyamide, Polyether und/oder Polyurethane sind.

3. Blends hoher Festigkeit und Flammresistenz nach Anspruch 2, **dadurch gekennzeichnet, dass** die als Methylensequenzen enthaltenden thermoplastischen Polymere in den Blends enthaltenen Polyolefine Homo- und/oder Copolymere von α-Olefinen mit 2 bis 18 C-Atomen, bevorzugt lineare und/oder verzweigte Polyethylen- Homo- und/oder -Copolymere, Cycloolefin-Ethylen-Copolymere, Polypropylen-Homopolymere, statistische Propylen-Copolymere, Propylen-Blockcopolymere, statistische Propylen-Blockcopolymere, elastomere Polypropylene, nichtisotaktische Polypropylene, isotaktisches Polybuten-1 und/oder 4-Methylpen-ten-1- Homo- und/oder -Copolymere sind.

4. Blends hoher Festigkeit und Flammresistenz nach Anspruch 1, **dadurch gekennzeichnet, dass** die Melaminharzfasern Fasern einer Dicke von 1 bis 40 µm und einer Länge von 0,1 bis 50 mm sind, die gegebenenfalls mit 0,1 bis 3 Masse%, bezogen auf die Melaminharzfasern, flammhemmenden Schlichten vom Typ Siloxane, Polyalkohole, Phosphate und/oder Polyphosphate beschichtet sind, wobei die Melaminharzfasern aus hochkonzentrierten wäss-rigen Lösungen der, gegebenenfalls mit C₁-C₈-Alkoholen veretherten, Melaminharze durch Zentrifugenspinnen, Fadenziehen, Extrudieren oder Fibrillierungsprozesse, gegebenenfalls nachfolgende Reckung, und Härtung hergestellt worden sind, die Melaminharze Polykondensate aus Melamin mit Formaldehyd und/oder Mischungen aus 20 bis 99,9 Masse% Melamin und 0,1 bis 80 Masse% Melaminderivaten und/oder Triazinderivaten, bevorzugt Ammelin, Ammelid, Cyanursäure und/oder Cyanmelluramid enthaltende Mischungen, gegebenenfalls unter Zusatz von 0,1 bis 10 Masse%, bezogen auf die Summe von Melamin, Melaminderivaten und Triazinderivaten, an Phenolen, mit Formaldehyd, sind, und das Molverhältnis Melamin/Formaldehyd bzw. Melamin + Melaminderivat bzw. Triazinderivat / Formaldehyd in den Melaminharzfasern 1 : 1,1 bis 1 : 5 beträgt.

5. Blends hoher Festigkeit und Flammresistenz nach Anspruch 1, **dadurch gekennzeichnet, dass** die Melaminharzfasern Fasern einer Dicke von 1 bis 100 µm und einer Länge von 0,1 bis 50 mm sind, die gegebenenfalls mit 0,1 bis 3 Masse%, bezogen auf die Melaminharzfasem, flammhemmenden Schlichten vom Typ Siloxane, Polyalkohole, Phosphate und/-oder Polyphosphate beschichtet sind, wobei die Melaminharzfasern durch Schmelze-verspinnen von mit C₁-C₈-Alkoholen veretherten Melaminharzen bei Massetemperaturen von 140 bis 200°C und gegebenenfalls Nachhärtung und Reckung der Fasern hergestellt worden sind, die Melaminharze Polykondensate aus Melamin mit Formaldehyd und/oder Mischungen aus 20 bis 99,9 Masse% Melamin und 0,1 bis 80 Masse% Melaminderivaten und/oder Triazinderivaten, bevorzugt Ammelin, Ammelid, Cyanursäure und/oder Cyanmelluramid enthaltende Mischungen, gegebenenfalls unter Zusatz von 0,1 bis 10 Masse%, bezogen auf die Summe von Melamin, Melaminderivaten und Triazinderivaten, an Phenolen, mit Formaldehyd, sind, und das Molverhältnis Melamin/Formaldehyd bzw. Melamin + Melaminderivat bzw. Triazinderivat / Formaldehyd in den Melaminharzfasem 1 : 1,1 bis 1 : 5 beträgt.

6. Blends hoher Festigkeit und Flammresistenz nach Anspruch 1, **dadurch gekennzeichnet, dass** die in den Blends als Kompatibilisatoren enthaltenen Copolymere und/oder Pfropfcopolymere Hydroxyethyl(meth)acrylat-Butyl(meth)acrylat-(Meth)Acrylsäure-Copolymere und /oder mit Hydroxyethyl(meth)acrylat gepfropfte Polyethylene, Polypropylene bzw. Ethylen-Vinylacetat-Copolyere sind.

7. Verfahren zur Herstellung von Blends hoher Festigkeit und Flammresistenz, **dadurch gekennzeichnet, dass** Mischungen aus 50 bis 97 Masse% Methylensequenzen-enthaltenden thermoplastischen Polymeren, 3 bis 50 Masse% Melaminharzfasern, 0,1 bis 20 Masse%, bezogen auf die Methylensequenzen-enthaltenden thermoplastischen Polymere, üblichen Zusatzstoffen und 0,1 bis 10 Masse%, bezogen auf die Methylensequenzen-enthaltenden thermoplastischen Polymere, Copolymere und/oder Pfropfcopolymere mit 0,1 bis 20 Masse% gebundenen Hydroxy-C₂-C₁₆-alkyl-acrylaten, Hydroxy-C₂-C₁₆-alkyl-methacrylaten, ethylenisch ungesättigten C₃₋ bis C₁₆-Carbonsäuren, C₄₋ bis C₁₆-Dicarbonsäuren, C₄₋ bis C₁₆-Dicarbonsäureanhydriden, C₅₋ bis C₁₇-Glycidylverbindungen und/oder C₅₋ bis C₁₆-Isoxalinver-bindungen sowie oligomere Polyester oder Alkydharze als Kompatibilisatoren in kontinuierlichen Knetem bei Massetemperaturen im Bereich von 140 bis 290°C und Verweilzeiten von 2 bis 15 min homogenisiert werden.

8. Verfahren zur Herstellung von Blends hoher Festigkeit und Flammresistenz nach Anspruch 7, **dadurch gekennzeichnet, dass** als kontinuierliche Kneter Doppel-schneckenextruder mit einer Schneckenlänge L/D von 35 bis 50 eingesetzt werden.

9. Verfahren zur Herstellung von Blends hoher Festigkeit und Flammresistenz nach Anspruch 7, **dadurch gekennzeichnet, dass** die Melaminharzfasern bei der Herstellung der Blends als Batch aus 50 bis 95 Masse% Melaminharzfasern und 50 bis 5 Masse% Kompatibilisatoren eingesetzt werden.

10. Verfahren zur Herstellung von Blends hoher Festigkeit und Flammresistenz nach Anspruch 7, **dadurch gekennzeichnet, dass** die Melaminharzfasern direkt in die Schmelze der Methylensequenzen-enthaltenden thermoplastischen Polymeren dosiert werden.

11. Verwendung von Blends hoher Festigkeit und Flammresistenz nach Anspruch 1 zur Herstellung von Folien, Fasern, Platten, Beschichtungen, Rohren, Spritzgussartikeln, Hohlkörpern und Schaumstoffen.

## Claims

1. High strength and flame resistance blends comprising 50 to 97% by mass of thermoplastic polymers which contain methylene sequences, 3 to 50% by mass of melamine resin fibres and 0.1 to 20% by mass, based on the thermoplastic polymers which contain methylene sequences, of customary additives, **characterized in that** the blends contain as a further component 0.1 to 10% by mass, based on the thermoplastic polymers which contain methylene sequences, of random and/or block and/or graft copolymers with 0.1 to 20% by mass of bound hydroxyl-C₂-C₁₆-alkyl acrylates, hydroxyl-C₂-C₁₆-alkyl methacrylates, ethylenically unsaturated C₃-to C₁₆-carboxylic acids, C₄- to C₁₆-dicarboxylic acids, C₄- to C₁₆-dicarboxylic anhydrides, C₅- to C₁₇-glycidyl compounds and/or C₅- to C₁₆-isoxaline compounds and also oligomeric polyesters or alkyd resins as compatibilizers.

2. High strength and flame resistance blends according to Claim 1, **characterized in that** the thermoplastic polymers which contain methylene sequences are polyolefins, polyvinyl compounds, polyvinylidene compounds, polyesters, polyamides, polyethers and/or polyurethanes.

3. High strength and flame resistance blends according to Claim 2, **characterized in that** the polyolefins included in the blends as thermoplastic polymers which contain methylene sequences are homo- and/or copolymers of α-olefins having 2 to 18 carbon atoms, preferably linear and/or branched polyethylene homo- and/or copolymers, cycloolefin-ethylene copolymers, polypropylene homopolymers, random propylene copolymers, propylene block copolymers, random propylene block copolymers, elastomeric polypropylenes, non-isotactic polypropylenes, isotactic polybutene-1 and/or 4-methylpentene-1 homo- and/or copolymers.

4. High strength and flame resistance blends according to Claim 1, **characterized in that** the melamine resin fibres are fibres from 1 to 40 µm in thickness and from 0.1 to 50 mm in length which have optionally been coated with 0.1 to 3% by mass, based on the melamine resin fibres, of flame-retarding sizes selected from siloxanes, polyalcohols, phosphates and/or polyphosphates, the melamine resin fibres having been produced from highly concentrated aqueous solutions of unetherified or C₁-C₈-alcohol-etherified melamine resins by centrifugal spinning, thread-pulling, extrusion or fibrillation operations, optionally subsequent drawing, and curing, the melamine resins are polycondensates of melamine with formaldehyde and/or mixtures of 20 to 99.9% by mass of melamine and 0.1 to 80% by mass of melamine derivatives and/or triazine derivatives, preferably mixtures containing ammeline, ammelide, cyanuric acid and/or cyanomelluramide, optionally with addition of 0.1 to 10% by mass, based on the sum total of melamine, melamine derivatives and triazine derivatives, of phenols, with formaldehyde, and the molar ratio of melamine/ formaldehyde or melamine + melamine derivative or triazine derivative/formaldehyde in the melamine resin fibres is in the range from 1:1.1 to 1:5.

5. High strength and flame resistance blends according to Claim 1, **characterized in that** the melamine resin fibres are fibres from 1 to 100 µm in thickness and from 0.1 to 50 mm in length which have optionally been coated with 0.1 to 3% by mass, based on the melamine resin fibres, of flame-retarding sizes selected from siloxanes, polyalcohols, phosphates and/or polyphosphates, the melamine resin fibres having been produced by melt spinning of C₁-C₈-alcohol-etherified melamine resins at melt temperatures of 140 to 200°C and optionally postcuring and drawing of the fibres, the melamine resins are polycondensates of melamine with formaldehyde and/or mixtures of 20 to 99.9% by mass of melamine and 0.1 to 80% by mass of melamine derivatives and/or triazine derivatives, preferably mixtures containing ammeline, ammelide, cyanuric acid and/or cyanomelluramide, optionally with addition of 0.1 to 10% by mass, based on the sum total of melamine, melamine derivatives and triazine derivatives, of phenols, with formaldehyde, and the molar ratio of melamine/ formaldehyde or melamine + melamine derivative or triazine derivative/formaldehyde in the melamine resin fibres is in the range from 1:1.1 to 1:5.

6. High strength and flame resistance blends according to Claim 1, **characterized in that** the copolymers and/or graft copolymers included in the blends as compatibilizers are hydroxyethyl (meth)acrylate-butyl (meth)acrylate-methacrylic acid copolymers and/or hydroxyethyl (meth)acrylate-grafted poly-ethylenes, polypropylenes or ethylene-vinyl acetate copolymers.

7. Process for producing high strength and flame resistance blends, **characterized in that** mixtures of 50 to 97% by mass of thermoplastic polymers which contain methylene sequences, 3 to 50% by mass of melamine resin fibres and 0.1 to 20% by mass, based on the thermoplastic polymers which contain methylene sequences, of customary additives and 0.1 to 10% by mass, based on the thermoplastic polymers which contain methylene sequences, of random and/or block and/or graft copolymers with 0.1 to 20% by mass of bound hydroxyl-C₂-C₁₆-alkyl acrylates, hydroxyl-C₂-C₁₆-alkyl methacrylates, ethylenically unsaturated C₃-to C₁₆-carboxylic acids, C₄- to C₁₆-dicarboxylic acids, C₄- to C₁₆-dicarboxylic anhydrides, C₅- to C₁₇-glycidyl compounds and/or C₅- to C₁₆-isoxaline compounds and also oligomeric polyesters or alkyd resins as compatibilizers are homogenized in continuous kneaders at melt temperatures in the range from 140 to 290°C in the course of residence times from 2 to 15 min.

8. Process for producing high strength and flame resistance blends according to Claim 7, **characterized in that** the continuous kneaders used are twin screw extruders having an L/D screw length of 35 to 50.

9. Process for producing high strength and flame resistance blends according to Claim 7, **characterized in that** the melamine resin fibres are used in the production of the blends as a batch composed of 50 to 95% by mass of melamine resin fibres and 50 to 5% by mass of compatibilizers.

10. Process for producing high strength and flame resistance blends according to Claim 7, **characterized in that** the melamine resin fibres are metered directly into the melt of the thermoplastic polymers which contain methylene sequences.

11. Use of high strength and flame resistance blends according to Claim 1 for producing film, fibre, sheet, coatings, tube, injection mouldings, hollowware and foam.

## Revendications

1. Alliages à haute résistance mécanique et haute résistance au feu, constitués de 50 à 97 % en masse de polymères thermoplastiques contenant des séquences méthylène, 3 à 50 % en masse de fibres de résine mélamine et 0,1 à 20 % en masse, par rapport aux polymères thermoplastiques contenant des séquences méthylène, d'additifs usuels, **caractérisés en ce que** les alliages contiennent en tant qu'autres composants 0,1 à 10 % en masse, par rapport aux polymères thermoplastiques contenant des séquences méthylène, de copolymères et/ou de copolymères greffés comportant de 0,1 à 20 % en masse d'acrylates d'hydroxyalkyle(C₂-C₁₆), de méthacrylates d'hydroxyalkyle(C₂-C₁₆), d'acides carboxyliques en C₃-C₁₆ à insaturation éthylénique, d'acides dicarboxyliques en C₄-C₁₆, d'anhydrides d'acides dicarboxyliques en C₄-C₁₆, de composés glycidyliques en C₅-C₁₇ et/ou de composés isoxaline en C₅-C₁₆, liés, ainsi que des polyesters oligomères ou des résines alkyde en tant qu'agents de compatibilité.

2. Alliages à haute résistance mécanique et haute résistance au feu selon la revendication 1, **caractérisés en ce que** les polymères thermoplastiques contenant des séquences méthylène sont des polyoléfines, des composés polyvinyliques, des composés polyvinylidène, des polyesters, des polyamides, des polyéthers et/ou des polyuréthannes.

3. Alliages à haute résistance mécanique et haute résistance au feu selon la revendication 2, **caractérisés en ce que** les polyoléfines contenues dans les alliages en tant que polymères thermoplastiques contenant des séquences méthylène sont des homo- et/ou copolymères d'α-oléfines ayant de 2 à 18 atomes de carbone, de préférence des homo- et/ou copolymères polyéthylène linéaires et/ou ramifiés, des copolymères cyclo-oléfine/éthylène, des homopolymères polypropylène, des copolymères statistiques de propylène, des copolymères séquencés de propylène, des copolymères séquencés statistiques de propylène, des polypropylènes élastomères, des polypropylènes non isotactiques, le polybutène-1 isotactique et/ou des homo- et/ou copolymères de 4-méthylpentène-1.

4. Alliages à haute résistance mécanique et haute résistance au feu selon la revendication 1, **caractérisés en ce que** les fibres de résine mélamine sont des fibres ayant une épaisseur de 1 à 40 µm et une longueur de 0,1 à 50 mm, qui sont éventuellement enrobées avec 0,1 à 3 % en masse, par rapport aux fibres de résine mélamine, de couches ignifuges du type siloxanes, polyalcools, phosphates et/ou polyphosphates, les fibres de résine mélamine ayant été produites à partir de solutions aqueuses hautement concentrées des résines mélamines éventuellement éthérifiées avec des alcools en C₁-C₈, par centrifugation, tirage de fils, extrusion ou des processus de fibrillation, éventuellement étirage subséquent, et durcissement ; les résines mélamine étant des produits de polycondensation de mélamine avec le formaldéhyde et/ou des mélanges de 20 à 99,9 % en masse de mélamine et de 0,1 à 80 % en masse de dérivés de mélamine et/ou de dérivés de triazine, de préférence des mélanges contenant de l'amméline, de l'ammélide, de l'acide cyanurique et/ou du cyanomelluramide, éventuellement avec addition de 0,1 à 10 % en masse de phénols, par rapport à la somme de mélamine, dérivés de mélamine et dérivés de triazine, avec du formaldéhyde, et le rapport molaire mélamine/formaldéhyde ou mélamine + dérivé de mélamine ou dérivé de triazine/formaldéhyde dans les fibres de résine mélamine allant de 1:1,1 à 1:5.

5. Alliages à haute résistance mécanique et haute résistance au feu selon la revendication 1, **caractérisés en ce que** les fibres de résine mélamine sont des fibres d'une épaisseur de 1 à 100 µm et d'une longueur de 0,1 à 50 mm, qui sont éventuellement enrobées avec 0,1 à 3 % en masse, par rapport aux fibres de résine mélamine, de couches ignifuges du type siloxanes, polyalcools, phosphates et/ou polyphosphates, les fibres de résine mélamine ayant été produites par filage de masse fondue de résines mélamines éthérifiées avec des alcools en C₁-C₈, à des températures de la masse de 140 à 200°C et éventuellement post-durcissement et étirage des fibres, les résines mélamine étant des produits de condensation de mélamine avec le formaldéhyde et/ou des mélanges de 20 à 99,9 % en masse de mélamine et de 0,1 à 80 % en masse de dérivés de mélamine et/ou de dérivés de triazine, de préférence des mélanges contenant de l'amméline, de l'ammélide, de l'acide cyanurique et/ou du cyanomelluramide, éventuellement avec addition de 0,1 à 10 % en masse de phénols, par rapport à la somme de mélamine, dérivés de mélamine et dérivés de triazine, avec du formaldéhyde, et le rapport molaire mélamine/formaldéhyde ou mélamine + dérivé de mélamine ou dérivé de triazine/formaldéhyde dans les fibres de résine mélamine allant de 1:1,1 à 1:5.

6. Alliages à haute résistance mécanique et haute résistance au feu selon la revendication 1, **caractérisés en ce que** les copolymères et/ou copolymères greffés contenus en tant qu'agents de compatibilité dans les alliages sont des copolymères (méth)acrylate d'hydroxy-éthyle-(méth)acrylate de butyle-acide (méth)acrylique et/ou des polyéthylènes, polypropylènes ou copolymères éthylène-acétate de vinyle greffés avec du (méth)-acrylate d'hydroxyéthyle.

7. Procédé pour la production d'alliages à haute résistance mécanique et haute résistance au feu, **caractérisé en ce qu'**on homogénéise des mélanges de 50 à 97 % en masse de polymères thermoplastiques contenant des séquences méthylène, 3 à 50 % en masse de fibres de résine mélamine, 0,1 à 20 % en masse, par rapport aux polymères thermoplastiques contenant des séquences méthylène, d'additifs usuels, et 0,1 à 10 % en masse, par rapport aux polymères thermoplastiques contenant des séquences méthylène, de copolymères et/ou de copolymères greffés comportant de 0,1 à 20 % en masse d'acrylates d'hydroxyalkyle(C₂-C₁₆), de méthacrylates d'hydroxyalkyle(C₂-C₁₆), d'acides carboxyliques en C₃-C₁₆ à insaturation éthylénique, d'acides dicarboxyliques en C₄-C₁₆, d'anhydrides d'acides dicarboxyliques en C₄-C₁₆, de composés glycidyliques en C₅-C₁₇ et/ou de composés isoxaline en C₅-C₁₆, liés, ainsi que des polyesters oligomères ou des résines alkyde en tant qu'agents de compatibilité, dans des malaxeurs continus, à des températures de la masse dans la plage allant de 140 à 290°C et avec des temps de séjour de 2 à 15 minutes.

8. Procédé pour la production d'alliages à haute résistance mécanique et haute résistance au feu selon la revendication 7, **caractérisé en ce qu'**on utilise en tant que malaxeurs continus des extrudeuses double vis ayant une longueur de vis L/D de 35 à 50.

9. Procédé pour la production d'alliages à haute résistance mécanique et haute résistance au feu selon la revendication 7, **caractérisé en ce que**, dans la production de l'alliage, les fibres de résine mélamine sont utilisées sous forme de charge de 50 à 95 % en masse de fibres de résine mélamine et de 50 à 5 % en masse d'agents de compatibilité.

10. Procédé pour la production d'alliages à résistance mécanique et haute résistance au feu selon la revendication 7, **caractérisé en ce que** les fibres de résine mélamine sont introduites directement dans la masse fondue des polymères thermoplastiques contenant des séquences méthylène.

11. Utilisation d'alliages à haute résistance mécanique et haute résistance au feu selon la revendication 1, pour la fabrication de films, fibres, plaques, revêtements, tubes, articles moulés par injection, corps creux et mousses.
